# FASCICULE DE BREVET EUROPEEN

(11) **EP 2 127 384 B1**
(45) Date de publication et mention de la délivrance du brevet: **21.07.2010**
(21) Numéro de dépôt: 08775650.8
(22) Date de dépôt: 26.02.2008
(51) Int. Cl.: H04N 7/24

(54) **PROCEDE DE DIFFUSION DE SEQUENCES DE DONNEES AUDIO ET VIDEO PAR UN SERVEUR**
VERFAHREN ZUR AUSGABE VON AUDIO- UND VIDEODATENSEQUENZEN DURCH EINEN SERVER
METHOD FOR THE DELIVERY OF AUDIO AND VIDEO DATA SEQUENCES BY A SERVER

(30) Priorité: 27.02.2007 FR 0753538
(43) Date de publication de la demande: 02.12.2009
(73) Titulaire: SAGEM COMMUNICATIONS SAS, 92848 Rueil Malmaison Cedex (FR)
(72) Inventeur: MORARD, Jean Pierre, 92200 Neuilly sur Seine (FR)
(74) Mandataire: Schmit, Christian Norbert Marie
(86) Numéro de dépôt international: PCT/FR2008/050319
(87) Numéro de publication internationale: WO 2008/119902

(56) Documents cités:
- EP-A- 0 607 904
- WO-A-2004/104773
- US-A1- 2006 288 392
- US-B1- 6 484 212

## Description

La présente invention se rapporte à un procédé de diffusion de séquences de données audio et vidéo par un serveur. La multiplicité des médias au sein même des foyers ouvre de nombreuses possibilités. La présence d'un réseau offre la possibilité de connecter entre eux différents éléments média d'un même foyer. Un tel réseau se présente sous la forme d'un dispositif serveur, ou serveur, généralement un ordinateur, et de dispositifs clients, ou clients, par exemple des décodeurs vidéo, reliés entre eux par un réseau, que ce soit sous forme HDMI, de WIFI, ethernet voire par courant porteur.

Une telle configuration permet de créer un bureau. Un tel bureau comporte une présentation sur un écran, typiquement celui du client, d'un menu permettant à un utilisateur du client d'effectuer une commande. Ce bureau est géré par le serveur mais commandé à distance par le client via le réseau. Cette configuration permet aussi l'utilisation d'un centre média à distance dans ces mêmes conditions.

Un centre média est un dispositif comportant d'une part un organe de commande et d'autre part un organe d'action pour tenir compte de la commande. Typiquement l'organe de commande peut comporter un affichage sur un écran, par exemple celui du bureau, de boutons de contrôle. Cet organe de commande comporte un dispositif, par exemple une télécommande, pour enclencher les boutons de contrôle affichés. L'organe d'action du centre média gère les action engendrées par l'enclenchement des boutons affichés, par exemple le fait de monter le son ou encore de passer d'une séquence vidéo à une autre.

Un tel bureau ou centre média peut, par exemple, être affiché par le client sur un écran de télévision de salon ou autre moyen d'affichage formant une interface utilisateur. Un logiciel de l'interface utilisateur permet un affichage de données. L'utilisateur peut interagir avec les données affichées à l'aide d'un dispositif de commande tel qu'une télécommande par exemple. Typiquement l'organe de commande d'un centre média tel que défini ci dessus fait aussi partie de l'interface utilisateur.

La gestion d'un centre média par un utilisateur se fait au niveau du client. Une interface utilisateur peut se définir comme un arbre de commandes possibles pour l'utilisateur. Ainsi l'utilisateur interagit avec cette interface utilisateur en donnant des ordres d'exécution, à l'aide d'une télécommande par exemple, parmi des choix possibles affichés par l'interface utilisateur. Ces ordres sont reçus par le client et entraînent la création d'interactions utilisateurs par le client.

Suite à la création d'une interaction utilisateur, le client envoie un message de requête au serveur afin de faire traiter ladite interaction utilisateur. C'est le serveur qui, en traitant le message de requête envoyé par le client, traite l'ordre de l'utilisateur. Une fois ce message de requête traité, le serveur envoie une réponse à ce message de requête au client. La réponse du serveur est produite par le traitement de l'interaction utilisateur et notamment par un encodage de données vidéo et audio à diffuser par le client suite à cette interaction utilisateur. Cette réponse est reçue et est décodée par le client qui affiche le résultat du traitement sur l'interface utilisateur.

Dans un tel système, le serveur encode, c'est à dire compresse, ce qu'il diffuse avant de l'envoyer au client. Si le serveur avait à afficher sur un écran qui lui est propre les images qu'il diffuse, il ne lui serait pas nécessaire de les compresser. Les organes de transfert dans le bus interne de la machine serveur supportent un débit élevé. Pour compresser typiquement le serveur effectue une capture de son propre affichage, l'encode et l'envoie via le réseau au client, par exemple à une adresses IP du client pour un réseau ethernet. L'encodage est donc effectué à partir d'une image définie séquentiellement point par point, dite au format bitmap. Une telle image définie séquentiellement point par point est bien adaptée à un affichage sur un moniteur.

L'encodage effectué par le serveur est du type spatio-temporel, c'est à dire que les données compressées comportent des données vidéo, audio et des signalisations afin de diffuser ces données correctement. Un tel encodage peut, par exemple, être effectué selon la norme H264. Un tel encodage compression permet de transmettre des données à haut débit sur une liaison simplifiée, par exemple HDMI. Le protocole H264 permet d'encoder des flux vidéo avec un débit inférieur à deux fois moins que celui obtenu par la norme MPEG2 pour la même qualité. La norme H264 dispose d'un mode de compression dans perte. Lors de l'encodage, une image est découpées en macroblocs unitaires. Chaque macrobloc est encodé

En réception, le client doit décoder les données audio/vidéo envoyées par le serveur. Le décodage de ces données par le client est généralement effectué par un circuit électronique dédié d'une carte graphique/son du client. Une fois les données décodées, le client les diffuse via ses moyens de diffusion sur son propre écran.

Cependant l'encodage des données par le serveur demande une puissance importante ou bien l'encodage par le serveur demande un temps de réalisation ne permettant pas un encodage des données en temps réel. En pratique, l'encodage demande au serveur cinq fois plus de puissance que n'en demande le décodage au client, les serveurs classique, domestiques, ne sont pas capable de l'encodage en temps réel.

Les centres média actuels contiennent un grand nombre d'animations. Ces animations sont par exemple une animation sur un bouton ou une icône, un fond d'écran en mouvement récurent ou encore le déroulement d'un menu déroulant. Ces animations sont de petites séquences vidéo. Pour les transmettre au client qui les demandes le serveur doit les encoder et les transmettre afin d'être diffusée via l'interface utilisateur. De telles séquences vidéo sont définies par une suite d'images diffusées à une vitesse suffisante pour obtenir une bonne fluidité de la vidéo. Un grand nombre de ces animations ont lieu à la suite d'interactions utilisateurs. Cependant, suite à de telles interactions utilisateurs, seule une partie de ce qui est affiché sur l'écran du client subit des modifications. En effet, par exemple pour un menu se déroulant suite à un clic utilisateur sur un bouton du menu affiché, seule la partie où le menu se déroule change, le reste de l'image restant fixe.

Actuellement, les protocoles audio/vidéo n'encodent que des images entières. Ainsi, l'encodage se fait sur les parties de l'image qui ont changé suite à l'interaction utilisateur ainsi que sur les parties de l'image qui n'ont pas changé. Cet encodage global ralentit fortement le temps d'encodage des données audio/vidéo à transférer.

Lors de test, concluants quant à la fonction principale d'affichage et de gestion à distance, le temps d'affichage des données audio/vidéo par le client s'est avéré excessivement long. Ce temps d'affichage était de l'ordre de quelques secondes pour une seule image. Ce temps d'affichage ne permet donc pas l'utilisation de cette fonction en l'état.

Le temps d'affichage excessivement long s'explique par deux facteurs. Premièrement, le temps de transmission sur la liaison IP et, deuxièmement, la durée du traitement des messages de requête. L'invention vise à réduire les deux temps. L'encodage et le décodage des données audio/vidéo est d'autant plus long que les données sont compressées et donc complexes. Actuellement, pour faire du décodage graphique avec ce genre d'applications, le décodeur doit intégrer une librairie graphique permettant la décompression des données audio/vidéo compressées.

Une solution connue de l'homme du métier pour résoudre les problèmes liés au temps de transmission des données via un réseau consiste à réduire le volume des données transitant par le réseau. Ainsi en compressant le plus possible les données suivant des normes de compression connues, les données audio/vidéo obtenues sont moins volumineuses. Ces informations compressées transitent donc plus vite via le réseau. Cependant une telle solution rend la compression des données audio/vidéo plus complexe encore. Cette complexité augmente le temps d'encodage par le serveur. Cette complexité augmente aussi le temps nécessaire au client pour décoder les données reçues. De plus cette solution est dépendante de l'intégration d'une librairie correspondant au format de compression utilisé dans le client. Cette solution apporte donc l'avantage de réduire le temps de transfert des données par le réseau mais augmente considérablement le temps de traitement des données audio/vidéo par le serveur et par le client.

En combinant l'application TightVNC avec le protocole H264 pour une capture d'écran, par exemple, le problème d'un encodage complet des images entières peut être résolu. Ainsi toutes les fonctions de détection de mouvement, de calcul des images etc. sont calculées par la bibliothèque H264. Une image entière de l'écran dans la vidéo est alors envoyé comportant uniquement les changements. Cette image ayant un taux de compression élevé. Par ailleurs la durée d'encodage d'une image varie peu.

Cependant, avec une telle méthode, il est nécessaire de reprendre totalement l'architecture du code de tightVNC serveur. Par ailleurs la durée d'encodage par le serveur risque d'être relativement longue. Avec un serveur ayant un processeur bicoeur à 2,8 GHz l'encodage, avec les options au minimum, dure plus d'un dixième de secondes par image en résolution 352 par 288 pour un bitrate à 30.0 Hz de 150 kilo octets par secondes. Une telle méthode prendrait donc de l'ordre de la seconde pour encoder une image ayant une résolution de 1280 par 720.

Le brevet US6,484,212 décrit une mémoire cache qui stocke une séquence codée préalablement transmise à un client. La publication W02004104773 décrit des onglets représentant une vidéo qui est téléchargée si l'onglet est sélectionné. Finalement, le document US2006288392 décrit la selection de trames d'une vidéo à l'aide d'une représentation graphique de cette vidéo.

Aucune de ces solutions ne semble donc résoudre efficacement le problème de gestion du transfert des données audio/vidéo à une vitesse acceptable dans un réseau.

Pour résoudre ce problème l'invention prévoit de réduire la charge d'encodage du serveur de plusieurs manières. Par ailleurs, l'invention prévoit de conserver un niveau de compression des données élevé. Dans un centre média ou dans un affichage de menu, les interactions utilisateurs sont souvent répétitives. Les animations engendrées par ces interactions utilisateur ont donc de grandes chances de survenir plusieurs fois durant une utilisation d'un centre média ou d'un menu. Afin de réduire sensiblement la tâche d'encodage du serveur, l'invention prévoit d'utiliser la mémoire du serveur afin de conserver les séquences audio/vidéo ayant déjà été encodée précédemment. Plus particulièrement, l'invention prévoit une étape durant laquelle le serveur cherche si le message de requête envoyé par le client a déjà été traité précédemment. Si le message envoyé par le client n'a jamais été traité par le passé, le serveur envoie une réponse rapide au client et traite complètement le message de requête en parallèle. Une fois le message de requête complètement traité, le résultat de ce traitement est sauvegardé en mémoire par le serveur. Ce traitement pourra être réutilisé par la suite si le client envoie une nouvelle fois le même message de requête. Si le message a déjà été traité par le serveur précédemment, le serveur envoie au client le résultat enregistré dans sa mémoire du traitement de ce message de requête.

L'invention prévoit aussi de réduire l'effort d'encodage du serveur en n'effectuant l'encodage que sur les données audio/vidéo ayant subit des changements suite à une interaction utilisateur. Pour cela, l'invention calcule les parties fixes de l'image et encode uniquement les données représentant des animations ou séquences vidéo correspondantes aux interactions utilisateurs.

De plus, l'invention traite les données au niveau des images brutes, telles qu'affichées. L'invention n'est donc pas dépendante d'un type de compression défini. L'invention peut donc faire gagner du temps au niveau de l'encodage quel que soit le type d'encodage choisit pour compresser les données audio/vidéo.

L'invention a donc pour objet procédé de diffusion de séquences de données audio et vidéo par un serveur délivrant des séquences de données audio et vidéo, dans lequel les séquences de données audio/vidéo étant de type défini séquentiellement point par point circulent via un réseau entre le serveur et un client, les séquences de données audio/vidéo reçues par le client sont diffusées par le client de manière interactive, un utilisateur du client donne un ordre de diffusion d'une séquence via une interface utilisateur du client, cet ordre engendrant la production et l'émission d'au moins un message de requête par le client vers le serveur, le message de requête transmis au serveur par le client est traité par le serveur sous la forme d'un encodage d'images selon un format compressé caractérisé en ce que le traitement du message de requête par le serveur comporte au moins les étapes suivantes
- une étape durant laquelle le serveur recherche dans une mémoire si le traitement de cette requête a déjà eu lieu et si des données compressées de cette séquence de données sont disponibles pour être livrée au client,
- si le traitement de ce message n'a pas déjà eu lieu précédemment :
   - le serveur envoie un message de réponse rapide au client, ce message de réponse rapide comporte une séquence audio/vidéo comportant la première et la dernière image de la séquence de données compressées,
   - le serveur traite cette requête de manière complète et met en mémoire le résultat du traitement complet de cette requête, devenant ainsi apte à livrer la réponse ultérieurement,
- si le traitement de cette requête a été réalisé précédemment, le serveur envoie directement les données de la séquence contenu dans la mémoire au client.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une installation d'un dispositif réseau selon l'invention.
- Figure 2 : Un schéma de réalisation du procédé selon l'invention.

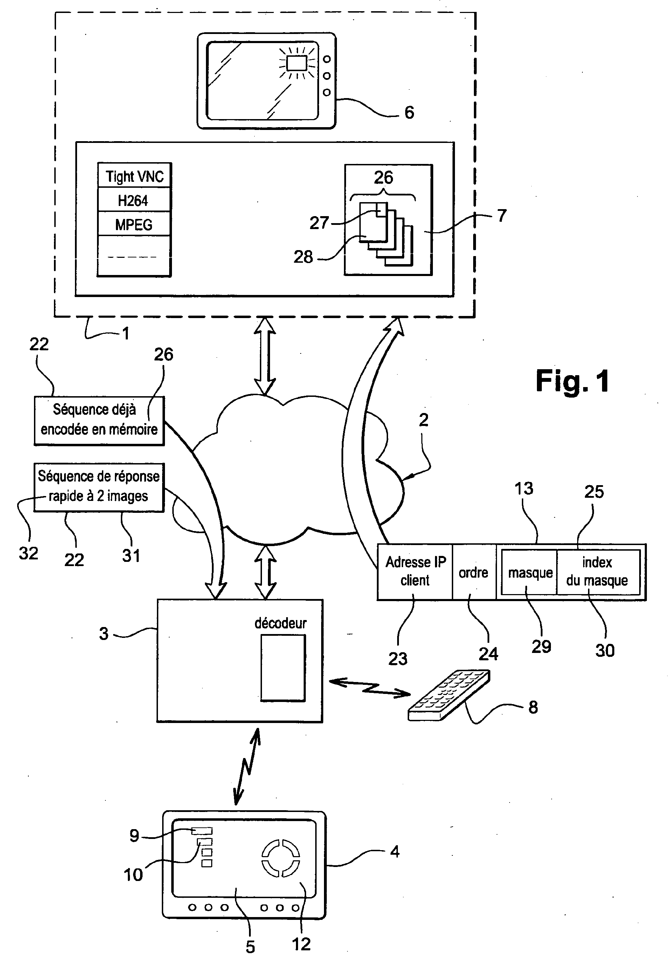

La figure 1 représente une installation d'un dispositif réseau selon l'invention. Une telle installation comporte un serveur 1 relié via un réseau 2 à un client 3. Le réseau 2 permet de faire circuler entre le serveur 1, par exemple un ordinateur 1, et le client 3, par exemple un décodeur, des données audio/vidéo. Un moyen 4 de diffusion d'une interface 5 utilisateur est relié au client 3. Un tel moyen 4 de diffusion peut, par exemple, être un téléviseur 4 de salon. Le serveur 1 comporte son propre moyen 6 de diffusion, par exemple un moniteur 6 d'ordinateur. Par ailleurs, le serveur 1 comporte sa propre mémoire 7. Le serveur 1 peut intégrer un protocole d'encodage tel que le protocole H264, et une application du type VNC serveur. L'utilisateur peut interagir avec l'interface 5 utilisateur par l'intermédiaire, par exemple, d'une télécommande 8. Ces interactions 11 sont reçues par le client 3 qui transmet au serveur 1 l'ordre engendré par ces interactions 11 utilisateur. Le serveur 1 traite l'ordre engendré par ces interactions 11 utilisateur et envoie au client 3 les données audio/vidéo correspondant à l'exécution de l'ordre donné suite à ces interactions 11 utilisateur.

Les données audio/vidéo reçues par le client 3 sont restituées par le client 3 de manière événementielle. C'est à dire que le client 3 permet à l'utilisateur d'interagir sur les données. Typiquement, une interface 5 utilisateur permet à l'utilisateur de naviguer suivant un arbre d'interactions 11 possible. Par exemple, l'interface 5 utilisateur peut se présenter sous la forme d'un menu 9 dans lequel l'utilisateur navigue en enclenchant des boutons 10 du menu 9 à l'aide d'une télécommande 8. L'enclenchement de tels boutons 10 peut se présenter sous la forme d'une petite animation correspondant à une séquence vidéo. Ces animations peuvent être, par exemple, présentes lors de l'activation d'un bouton 10, le passage sur un bouton 10, ou encore sur un fond d'écran animé. De telles animation sont des séquences vidéo affichées en fonction des interactions 11 utilisateurs. Cependant, ces animations ne modifient en général qu'une faible partie de l'image 12 affichée par l'interface 5 utilisateur, le reste de l'image 12 ne subissant aucune modification.

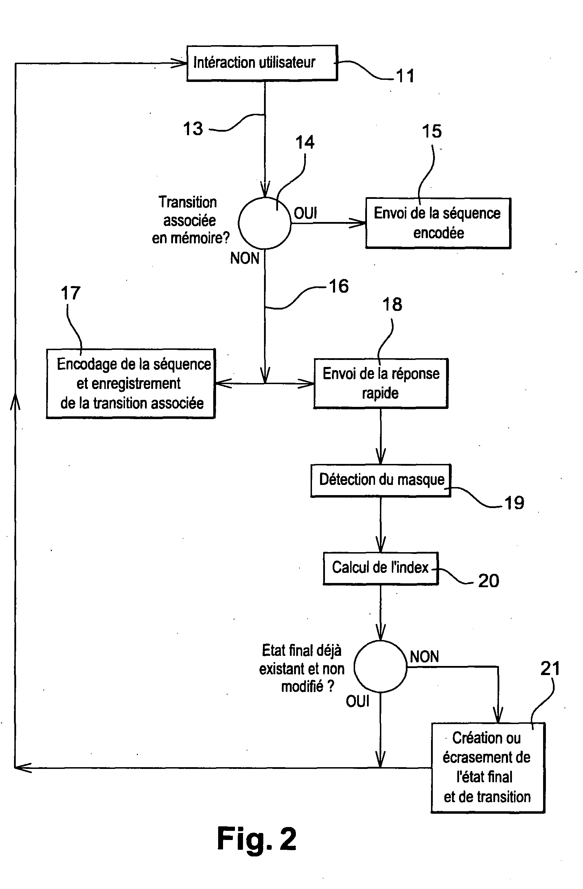

La figure 2 représente un schéma de réalisation du procédé selon l'invention. Les interactions 11 utilisateurs génèrent la création d'un message 13 de requête au niveau du client 3. Dès que le message de requête a été crée par le client 3, le client 3 envoie ce message de requête au serveur 1. Ces messages 13 de requête circulent via le réseau 2 entre le client 3 et le serveur 1. Dans l'état de la technique, le serveur 1 analyse la requête du client 3 et encode la réponse 22 avant d'envoyer cette réponse 22 au client 3. Le client 3 décode alors la réponse 22 reçue avant de diffuser les changements engendrés par ce message de requête via l'interface 5 utilisateur.

Les messages 13 de requête envoyés par le client 3 comportent différentes informations. Ces informations permettent au serveur 1 de traiter les données contenues dans ce message 13 et d'envoyer un message 22 de réponse au client 3. Ce message 22 de réponse permet une diffusion, par ledit client 3 via l'interface 5 utilisateur, des données audio/vidéo correspondantes à l'interaction 11 engendré par l'utilisateur. Un message 13 de requête comporte donc l'adresse 23 à laquelle le serveur 1 doit répondre, typiquement l'adresse IP 23 du client 3, un ordre 24 à exécuter suite à une interaction 11 utilisateur et un état 25 correspondant à l'affichage actuel diffusé par le client 3 via l'interface 5 utilisateur. Cet état 25 actuel permet au serveur 1 de traiter l'ordre 24 donné en fonction de l'affichage actuel de l'interface 5 utilisateur, c'est à dire d'encoder la séquence de données audio/vidéo à afficher via l'interface 5 utilisateur par le client 3 à partir de l'affichage actuel suite à ladite interaction 11 utilisateur.

Selon l'invention, lors d'une interaction 11 utilisateur entraînant une animation, le serveur 1 encode séparément l'animation et le masque. On appelle masque le fond de l'image qui reste fixe durant l'animation. En combinant, par exemple, l'application TightVNC avec le protocole H264 au niveau de la fonction d'envoi, le serveur 1 envoie uniquement les parties ayant changées suite à une interaction 11 utilisateur ainsi que la position où il faut placer cette séquence. Cette séparation de l'encodage permet de ne pas avoir à encoder l'intégralité de l'image à afficher lors d'une animation. Le serveur 1 n'encode alors que l'animation seule sans réencoder, pour chaque images d'un affichage comportant une animation, la totalité de l'image à chaque affichage.

De plus, l'invention prévoit que le serveur 1 garde en mémoire 7 les séquences 26 de données compressées de la séquence audio/vidéo encodée correspondant à ladite animation. Si l'interaction 11 utilisateur ayant entraîné cette animation à partir du même masque venait à se reproduire par la suite, le serveur 1 n'encoderait pas à nouveau l'animation mais enverrait directement la séquence 26 de données déjà encodée correspondante et déjà mise en mémoire 7. Une telle utilisation de la mémoire 7 permet d'alléger le travail du serveur 1 et ce quelque soit le type d'encodage choisit.

Cependant, il est nécessaire, pour retrouver la séquence 26 de données encodée correspondante à un masque et à une interaction 11 utilisateur donnée, de pouvoir aller chercher la bonne séquence 26 de données, pour cela un système d'indexation des séquences 26 de données compressées est nécessaire. Selon l'invention, cette indexation 27 se fait sur la première image 28 d'une séquence 26 audio/vidéo. Une telle indexation 27 travaillant sur une image 28 seule n'est pas dépendante d'un type de compression donné et peut donc être appliquée avec n'importe quel type d'encodage audio/vidéo.

Pour effectuer ces étapes, un message 13 de requête comporte donc l'ordre 24 correspondant à l'interaction 11 utilisateur, le masque 29, un index 30 du masque et les informations 23 relatives au réseau 2. Le traitement des messages 13 de requête comporte une phase de recherche et, au besoin, une phase d'encodage des données audio/vidéo. Cet encodage peut par exemple être réalisé suivant la norme H264. Les séquences 26 de données audio/vidéo encodées sont les images normalement affichées par le serveur 1, c'est à dire que ces images sont des captures d'écran du serveur 1. Ces images sont donc de type défini séquentiellement point par point.

Un état 25 est défini comme comportant un masque 29 et un index 30 du masque. Selon l'invention, les états 25 sont à accès direct par les index 30 afin de savoir rapidement si, étant données une image indexée, elle correspond à un état 25 déjà connu ou non. Si l'état 25 est déjà connu, le serveur 1 cherche si il existe une transition a partir du masque 29 correspondant à cet état 25. Un masque 29 est une découpe de l'image ne comportant que les parties fixes de l'image. Typiquement, dans un masque 29 se trouve l'image affichée sans les parties animées tels que les menus animés ou boutons animés de l'image affichée.

Une transition comporte les interactions 11 utilisateurs ainsi que les séquences 26 vidéo correspondantes à cette interaction utilisateur. Ainsi, suite à une interaction 11 utilisateur entraînant le passage d'un état un à un état deux, on passe par une transition comportant une séquence audio/vidéo permettant de passer de l'état un à l'état deux. Les transitions sont indexées sur la première image 28 de la séquence 26 de données audio/vidéo qu'elles comportent. Cette indexation 27 permet d'avoir un accès direct à cette séquence 26 si l'interaction 11 utilisateur et le masque 29 correspondant à l'état 25 initial à déjà eu lieu, les masques 29 et les transitions étant complémentaires pour former une image complète.

Lors du premier démarrage, le serveur 1 effectue plusieurs étapes. Durant une première étape, le serveur 1 encode l'intégralité de la séquence de démarrage à afficher et envoie directement au client 3 cette séquence de démarrage. Durant une seconde étape, le serveur 1 détermine le premier masque et le premier index correspondant à l'état de démarrage. Enfin, lors d'une troisième étape, le serveur 1 associe l'état ayant cet index et le masque correspondant. Par la suite, lors d'un changement d'état suite à une interaction 11 utilisateur, le message de requête 13 contiendra l'index de l'état associé à l'affichage actuel de l'interface 5 utilisateur. Pour cela le serveur 1 mémorise, par exemple dans sa mémoire cache, l'état et son index.

Après le démarrage de l'installation, l'invention comporte plusieurs étapes. Le serveur 1 à déjà enregistré en mémoire 7 un ou plusieurs états 25 s'étant déjà produit. Lors d'une interaction 11 utilisateur engendrant un changement d'état 25, le client 3 envoie un message 13 de requête tel que décrit plus haut au serveur 1. Le serveur 1 traite alors immédiatement ce message 13 de requête. Dans un premier temps 14, le serveur 1 cherche dans sa mémoire 7 si il existe une transition indexée par l'interaction 11 utilisateur à partir de l'état 25 indexé envoyé par le client 3 dans son message 13 de requête.

Dans le cas 15 ou il existe en mémoire 7 une telle transition indexée, le serveur 1 envoie directement la séquence 26 de données audio/vidéo ayant déjà été encodée correspondante. L'absence d'obligation d'encodage permet un gain de temps important pour le serveur 1. Le serveur 1 n'ayant pas à encoder la séquence 26 de données audio/vidéo, le serveur 1 reste disponible pour effectuer d'autres tâches.

Dans le cas 16 ou il n'existe pas en mémoire 7 de transition indexée, le serveur 1 encode 17 la séquence audio/vidéo. Le serveur 1 indexe en suite cette séquence audio/vidéo et l'associe à une transition. Cependant, pour ne pas bloquer l'utilisateur le temps que le serveur 1 effectue l'encodage 17, le serveur 1 effectue une tâche 18 supplémentaire en parallèle de l'encodage 17. Cette tâche 18 supplémentaire consiste en l'envoi au client 3 d'un message 31 de réponse rapide. Pour faire gagner du temps au serveur 1 sans bloquer l'utilisateur, le serveur 1 envoie en réponse au client 3 une séquence 32 audio/vidéo ne comportant que deux images. Les deux images de ladite séquence 32 audio/vidéo sont la première et la dernière image de la séquence 26 de données audio/vidéo complète. La dernière image d'une séquence de données audio/vidéo est celle normalement directement affichée au niveau du serveur 1. Cette dernière image est donc directement accessible pour l'envoi de la réponse 31 rapide. Une fois l'encodage 17 de la séquence 26 de données audio/vidéo complète fini, le serveur 1 garde en mémoire 7 la transition correspondante à cette séquence 26 de données audio/vidéo et cette interaction 11 utilisateur.

L'envoi de cette réponse 31 rapide ne permet pas la diffusion de la séquence 26 de données audio/vidéo correspondante à l'interaction 11 utilisateur lors de la première occurrence de ladite interaction 11 utilisateur. Cette réponse 31 rapide ne permet d'afficher que la première et la dernière image de ladite séquence de données audio/vidéo. Cependant, cette réponse 31 rapide du serveur 1 évite à l'utilisateur de rester bloqué le temps que le serveur 1 effectue l'encodage 17 de ladite séquence 26 complète.

Une fois la séquence, ou la réponse 31 rapide émise par le serveur 1 selon le cas, envoyée au client 3, le serveur 1 calcule le masque 19 et l'index 20 de l'image finale obtenue. Ces éléments permettent de créer le nouvel état correspondant à cette image finale. Dans le cas ou aucune transition indexée correspondant à l'interaction 11 utilisateur n'existe à partir du premier état 25, cette transition est indexée par sa première image 28 et est mise en mémoire 7. Dans le cas ou une transition indexée par la même interaction 11 utilisateur en partant du premier état 25 existe déjà et que l'état final obtenu par l'interaction 11 utilisateur est différent de celui en mémoire 7 obtenu par cette transition indexée, la transition déjà en mémoire 7 est remplacée 21 par la nouvelle transition encodée.

Typiquement, le masque et les changements sont calculés à chaque fois. A chaque interaction 11 utilisateur, la différence entre l'image affichée et la dernière image du film gardé en mémoire 7 est calculée. Si ces images sont différentes, la transition est réencodée pendant l'affichage de l'ancienne transition. En suite, l'image correcte, c'est à dire l'image actuelle, est affichée après la diffusion de l'ancienne séquence audio/ vidéo. Une interaction 11 utilisateur ne peut engendrer qu'une unique séquence 26 vidéo indexée pour une image de départ de la séquence audio vidéo et une interaction 11 utilisateur donnés.

Un tel procédé présente l'avantage de gagner en temps d'exécution avec un centre média quelconque, étant donné que ce procédé n'utilise pas de type d'encodage particulier. Ce procédé de diffusion de séquences de données audio et vidéo par un serveur 1 est particulièrement adapté pour les interfaces 5 utilisateur tels que les menus que l'on peut trouver sur des DVD ou autres menus 9 ayant pour animations des changements précis sur lesquels les utilisateurs ne peuvent que passer d'un bouton 10 à un autre ayant des déplacements de curseurs prédéfinis.

## Revendications

1. Procédé de diffusion de séquences de données audio et vidéo par un serveur (1) délivrant des séquences de données audio et vidéo, dans lequel
- les séquences (26) de données audio/vidéo étant de type défini séquentiellement point par point circulent via un réseau (2) entre le serveur (1) et un client (3),
- les séquences (26) de données audio/vidéo reçues par le client (3) sont diffusées par le client (3) de manière interactive,
- un utilisateur du client (3) donne un ordre (24) de diffusion d'une séquence (26) via une interface (5) utilisateur du client (3), cet ordre (24) engendrant la production et l'émission d'au moins un message (13) de requête par le client (3) vers le serveur (1),
- le message (13) de requête transmis au serveur 1 par le client 3 est traité par le serveur 1 sous la forme d'un encodage d'images selon un format compressé,
**caractérisé en ce que** le traitement du message (13) de requête par le serveur 1 comporte au moins les étapes suivantes
- une étape durant laquelle le serveur 1 recherche dans une mémoire (7) si le traitement de cette requête a déjà eu lieu et si des données compressées de cette séquence (26) de données sont disponibles pour être livrée au client 3,
- si le traitement de cette requête n'a pas déjà eu lieu précédemment :
- le serveur 1 envoie un message (31) de réponse rapide au client 3, ce message (31) de réponse rapide comporte une séquence (32) audio/vidéo comportant la première et la dernière image de la séquence (26) de données compressées,
- le serveur 1 traite cette requête de manière complète et met en mémoire (7) le résultat du traitement complet de cette requête, devenant ainsi apte à livrer la réponse ultérieurement,
- si le traitement de cette requête a été réalisé précédemment, le serveur 1 envoie directement les données de la séquence (26) contenu dans la mémoire (7) au client 3.

2. Procédé selon la revendication 1 **caractérisé en ce que** les données audio et/ou vidéo sont encodées par le serveur 1 selon la norme H264.

3. Procédé selon l'une des revendications 1 à 2 **caractérisé en ce que** si le traitement du message (13) envoyé par le client 3 au serveur 1 n'a pas déjà eu lieu précédemment, le serveur 1 envoie le message (31) de réponse rapide et traite la requête de manière complète en parallèle.

4. Procédé selon l'une des revendications 1 à 3 **caractérisé en ce que** le traitement de la requête comporte une étape d'indexation des images (28) encodées de début de séquence (26) de données.

5. Procédé selon l'une des revendications 1 à 4 en ce que le traitement du message (13) de requête comporte une étape de recherche par index de séquences (26) compressées contenues dans la mémoire (7).

6. Procédé selon l'une des revendications 1 à 5 **caractérisé en ce que** l'encodage ne se fait que sur des zones modifiées des images.

7. Procédé selon l'une des revendications 1 à 6 **caractérisé en ce que** le traitement des messages (13) de requête comporte
- une étape de création d'un masque (29) représentant la partie fixe d'une image,
- une étape d'indexation de ce masque,
- une étape de création d'une transition représentant une partie animée de l'image,
- une étape d'indexation de cette transition
les index étant connus du client 3 et étant envoyés dans le message (13)de requête.

8. Procédé selon l'une des revendications 1 à 7 **caractérisé en ce qu'**une interaction (11) utilisateur engendre l'envoi d'une séquence (26) vidéo,
- cette interaction (11) étant exercée par l'utilisateur à partir d'une image de départ affichée sur le client (3),
- cette séquence vidéo est paramétrée par un état d'une base de données audio/vidéo du serveur 1 ou par le message (13) de requête.

9. Procédé selon la revendication 8 **caractérisé en ce que**
- lorsque l'état de la base de données du serveur 1 change, le traitement d'un message (13) de requête comporte une étape durant laquelle toute précédente séquence correspondant à cette interaction (11) utilisateur est remplacée par une nouvelle séquence (26) correspondant à un nouvel état de la base de donnée.

## Claims

1. A method for broadcasting audio and video data sequences by a server (1) transmitting audio and video data sequences, in which
- the audio/video data sequences (26), being stage by stage sequentially defined type sequences, travel via a network (2) between the server (1) and a client (3),
- the audio/video data sequences (26) received by the client (3) are broadcasted by the client (3) in an interactive manger,
- a user of the client (3) gives a broadcast order (24) for a sequence (26) via a user interface (5) of the client (3), this order (24) creating the production and transmission of at least one request message (13) by the client (3) to the server (1),
- the request message (13) transmitted to the server (1) by the client (3) is processed by the server (1) in the form of an image encoding operation according to a compressed format,
**characterised in that** the processing of the request message (13) by the server (1) comprises at least one of the following steps:
- a step in which the server (1) searches in a memory (7) in order to determine whether the processing operation for this request has already been performed and whether compressed data from this data sequence (26) is available to be transmitted to the client (3),
- if the processing operation for this request has not already been performed:
- the server (1) sends a quick reply message (31) to the client (3), this quick reply message (31) comprising an audio/video sequence (32) with the first and last images of the compressed data sequence (26),
- the server (1) fully processes this request and records the result from the full processing operation for this request in memory (7), thus becoming capable of transmitting the reply in the future,
- if the processing operation for this request has already been performed, the server (1) directly sends the data of the sequence (26) contained in the memory (7) to the client (3).

2. A method according to claim 1, **characterised in that** the audio and/or video data is encoded by the server (1) according to the H264 standard.

3. A method according to one of claims 1 to 2, **characterised in that** if the processing operation of the message (13) sent by the client (3) to the server (1) has not already been performed, the server (1) sends the quick reply message (31) and fully processes the request in parallel.

4. A method according to one of claims 1 to 3, **characterised in that** the processing operation of the request comprises a step involving the indexation of encoded images (28) of the beginning of the data sequence (26).

5. A method according to one of claims 1 to 4, **characterised in that** the processing operation of the request message (13) comprises a step involving the index searching of compressed sequences (26) contained in the memory (7).

6. A method according to one of claims 1 to 5, **characterised in that** the encoding operation is only performed on modified areas of the images.

7. A method according to one of claims 1 to 6, **characterised in that** the processing operation of the request messages (13) comprises:
- a step involving the creation of a mask (29) representing the stationary part of an image,
- a step involving the indexation of this mask,
- a step involving the creation of a transition representing an animated part of the image,
- a step involving the indexation of this transition,
the indexes being known to the client (3) and sent in the request message (13).

8. A method according to one of claims 1 to 7, **characterised in that** a user interaction (11) causes a video sequence (26) to be sent,
- this interaction (11) being exerted by the user from a starting image displayed on the client (3),
- this video sequence is parametered by a state of an audio/video database of the server 1 or by the request message (13).

9. A method according to claim 8, **characterised in that**
- when the state of the database of server 1 changes, the processing operation of a request message (13) comprises a step in which any former sequence corresponding to this user interaction (11) is replaced by a new sequence (26) corresponding to a new state of the database.

## Patentansprüche

1. Verfahren zum Übertragen von Audio- und Video-Datensequenzen durch einen Server (1), der Audio- und Video-Datensequenzen liefert, bei dem
- die Audio- und Video-Datensequenzen (26), die sequenziell und punktweises definiert sind, über ein Netzwerk (2) zwischen dem Server (1) und einem Kunden (3) zirkulieren,
- die Audio- und Videö-Datensequenzen (26), die vom Kunden (3) empfangen werden, vom Kunden (3) interaktiv übertragen werden,
- ein Benutzer des Kunden (3) einen Befehl (24) zum Übertragen einer Sequenz (26) über eine Benutzerschnittstelle (5) des Kunden (3) erteilt, wobei dieser Befehl (24) die Produktion und die Aussendung von zumindest einer Antragsnachricht (13) durch den Kunden (3) zum Server (1) auslöst,
- die Antragsnachricht (13), die dem Server (1) vom Kunden (3) übermittelt wird, vom Server (1) in Form einer Bildverschlüsselung in einem komprimierten Format verarbeitet wird,
**dadurch gekennzeichnet, dass** die Verarbeitung der Antragsnachricht (13) durch den Server (1) zumindest die folgenden Schritte enthält
- einen Schritt, bei dem der Server (1) in einem Speicher (7) überprüft, ob die Verarbeitung dieses Antrags bereits stattgefunden hat, und ob die komprimierten Daten dieser Datensequenz (26) verfügbar sind, um dem Kunden (3) geliefert zu werden,
- wenn die Verarbeitung dieses Antrags nicht bereits zuvor stattgefunden hat:
- schickt der Server (1) dem Kunden (3) eine schnelle Antwortnachricht (31) zu, wobei diese schnelle Antwortnachricht (31) eine Audio-/Videosequenz (32) mit dem ersten und dem letzten Bild der komprimierten Datensequenz (26) enthält,
- verarbeitet der Server (1) diesen Antrag vollständig und speichert (7) das Ergebnis der vollständigen Verarbeitung dieses Antrags ab, wodurch das System in der Lage ist, die Antwort später zu liefern,
- wenn die Verarbeitung dieses Antrags zuvor erfolgt ist, schickt der Server (1) die Daten der Sequenz (26), die im Speicher (7) enthalten sind, direkt an den Kunden (3).

2. Verfahren nach Anspruch 1, **dadurch gekennzeichnet, dass** die Audio- und/ oder Videodaten vom Server (1) entsprechend der Norm H264 verschlüsselt werden.

3. Verfahren nach einem der Ansprüche 1 bis 2, **dadurch gekennzeichnet, dass**, wenn die Verarbeitung der Nachricht (13), die vom Kunden (3) an den Server (1) geschickt wurde, zuvor noch nicht stattgefunden hat, der Server (1) die schnelle Antwortnachricht (31) abschickt, und den Antrag parallel dazu vollständig verarbeitet.

4. Verfahren nach einem der Ansprüche 1 bis 3, **dadurch gekennzeichnet, dass** die Antragsverarbeitung einen Schritt zum Indexieren der verschlüsselten Bilder (28) des Beginns der Datensequenz (26) enthält.

5. Verfahren nach einem der Ansprüche 1 bis 4, **dadurch gekennzeichnet, dass** die Verarbeitung der Antragsnachricht (13) einen Schritt zum Suchen von komprimierten Sequenzen (26) über einen Index enthält, die im Speicher (7) enthalten sind.

6. Verfahren nach einem der Ansprüche 1 bis 5, **dadurch gekennzeichnet, dass** die Verschlüsselung nur in den veränderten Zonen der Bilder erfolgt.

7. Verfahren nach einem der Ansprüche 1 bis 6, **dadurch gekennzeichnet, dass** die Verarbeitung von Antragsnachrichten (13) folgendes enthält:
- einen Schritt zum Erstellen einer Maske (29), die den fixen Abschnitt eines Bildes darstellt,
- einen Schritt zum Indexieren dieser Maske,
- einen Schritt zum Erstellen eines Übergangs, der einen animierten Abschnitt des Bildes darstellt,
- einen Schritt zum Indexieren dieses Übergangs
wobei die Indices dem Kunden (3) bekannt sind, und in der Antragsnachricht (13) verschickt werden.

8. Verfahren nach einem der Ansprüche 1 bis 7, **dadurch gekennzeichnet, dass** eine Benutzerinteraktion (11) die Verschickung einer Videosequenz (26) nach sich zieht,
- diese Interaktion (11) vom Benutzer ausgehend von einem Anfangsbild ausgeführt wird, das auf dem Kunden (3) angezeigt wird,
- diese Videosequenz durch einen Status einer Audio-/ Video-Datenbank auf dem Server (1) oder durch die Antragsnachricht (13) parametriert wird.

9. Verfahren nach Anspruch 8, **dadurch gekennzeichnet, dass**
- wenn sich der Status der Datenbank auf dem Server (1) ändert, die Verarbeitung einer Antragsnachricht (13) einen Schritt enthält, bei dem jede vorherige Sequenz, die dieser Benutzerinteraktion (11) entspricht, durch eine neue Sequenz (26) ersetzt wird, die einem neuen Status der Datenbank entspricht.
